# EUROPÄISCHE PATENTSCHRIFT

(11) **EP 0 672 637 B1**
(45) Veröffentlichungstag und Bekanntmachung des Hinweises auf die Patenterteilung: **06.09.2000**
(21) Anmeldenummer: 95100820.0
(22) Anmeldetag: 21.01.1995
(51) Int. Cl.: C04B 35/80, C04B 35/571, C04B 35/563, C04B 35/583

(54) **Faserverbundwerkstoff mit keramischer Matrix und Verfahren zu seiner Herstellung**
Fibre composite material having a ceramic matrix and method of making it
Matériau composite de fibres ayant une matrice céramique et procédé de sa fabrication

(30) Priorität: 17.03.1994 DE 4409099
(43) Veröffentlichungstag der Anmeldung: 20.09.1995
(73) Patentinhaber: DORNIER GmbH, 88039 Friedrichshafen (DE)
(72) Erfinder: Haug, Tilman, Dr.rer.nat., D-88690 Uhldingen (DE); Gödecke, Holger, Dipl.-Ing., D-88480 Achstetten (DE); Greil, Peter, Prof., D-91054 Erlangen (DE); Suttor, Daniel, Dipl.-Ing., D-91054 Erlangen (DE)

(56) Entgegenhaltungen:
- US-A- 5 133 993
- CHEMICAL ABSTRACTS, vol. 119, no. 8, 23.August 1993 Columbus, Ohio, US; abstract no. 78422, "Manufacture of fiber-reinforced composites with high strength and uniform density" XP002001616 & JP-A-05 070 227 (SUMITOMO ELECTRIC INDUSTRIES)

## Beschreibung

Die Erfindung betrifft einen hochtemperaturstabilen, hochfesten keramischen Faserverbundwerkstoff mit verbesserter Oxidationsbeständigkeit und ein Verfahren zu dessen Herstellung.

Der Einsatz keramischer Faserverbundwerkstoffe insbesondere mit Kohlenstoffasern erfordert ein Oxidationsschutzsystem, um bei oxidativen Umgebungsbedingungen und - Temperaturen oberhalb 400°C eine frühzeitige Faserschädigung und damit Degradation der mechanischen Eigenschaften zu vermeiden. Es ist ein Herstellungsverfahren erforderlich, das bei größtmöglicher Variabilität der Formgebung eine Schädigung der Faser vermeidet. Die thermomechanische und physikalische Kompabilität zwischen Faser und keramischer Matrix muß gewährleistet sein, wobei das Interface zwischen Faser und Matrix die mechanischen Eigenschaften des Verbundes maßgeblich bestimmt. Sowohl die Entwicklung eines hochtemperaturbeständigen, hochtesten keramischen Faserverbundwerkstoffes als auch die Frage des Oxidationsschutzes sind bisher mit erheblichen technologischen Problemen verbunden. Sie wurden zumeist getrennt betrachtet, indem die mechanischen Eigenschaften vom Faser-Matrix Verbund und die verbesserte Oxidationsbeständigkeit von einem externen Ein- oder Mehrschichtsystem gewährleistet werden sollen.

Die derzeit zur Verfügung stehenden anorganischen Fasern sind mit Ausnahme der Kohlenstofffasern bedingt durch strukturelle Umwandlungen in ihren Anwendungstemperaturen auf max. 1200°C beschränkt. Für höhere Temperaturen kommen bislang nur C-Fasern in Betracht. Die verschiedenen Routen für die Herstellung von C-Faserverbunden mit keramischer Matrix beinhalten Verfahren aus der herkömmlichen Pulvermetallurgietechnik, wobei eine Vorform mit dem die Matrix konstituierenden keramischen Werkstoff in Form von Pulvern oder Suspensionen infiltriert und anschließend durch Heißpressverfahren verdichtet wird. Hauptnachteil dieses Verfahrens ist die Faserschädigung beim Heißpressen. Ein weiteres Verfahren ist die Infiltration von Vorformen über CVI-Techniken (Chemical Vapour Infiltration), wobei insbesondere C/SiC und C/C Verbunde hergestellt werden konnten. Dieses Verfahren weist erhebliche Nachteile bezüglich der langen Prozeßdauer auf. Beide Verfahren sind limitiert in der Bauteilgröße und Komplexität.

Während zunächst zu Verbesserung der Oxidationsbestandigkeit Glasschichten auf der Basis von SiO₂, B₂O₃ und P₂O₅ untersucht wurden, standen später CVD-abgeschiedene SiC und Si₃N₄ -Schichten im Vordergrund. Reine Glasschichten sind je nach Zusammensetzung aufgrund ihres Benetzungsverhalten und den teilweise hohen Dampfdrücken einzelner Komponeten problematisch, während es bei CVD-abgeschiedenen Schichten oft zur Rißbildung und damit einer Beeinträchtigung des Langzeitschutzes kommt. Weitergehende Entwicklungsarbeiten aus dem Bereich der bemannten Raumfahrt führten zu Mehrschichtsystemen mit einer inneren SiC- und einer äußeren Glasschicht. Ein eigenes Forschungsgebiet ist der innere Oxidationsschutz der C-Faser, der ebenfalls aus komplexen Mehrschichtsystemen unter den Gesichtspunkten von Sauerstoff- und Kohlenstoffdiffusionsbarrieren aufgebaut wird.

Polymere organometallische Precursoren wie z. B.: Polysiloxane, die sich durch eine hohe keramische Ausbeute bei der pyrolytischen Umwandlung in eine keramische Phase auszeichnen, bieten die Möglichkeit, unter Ausnutzung der Herstellungsverfahren der faserverstärkten Kunststoffe, einen Faserverbundwerkstoff mit keramischer Matrix unter Beibehaltung der variablen Formgebung herzustellen.

Die mit der Polymer-Keramik Umwandlung verbundene hohe Schwindung (typischerweise bis 30% linear) führt zu einer starken Porositäts- und Rißbildung. Die Erzeugung dichter Matrices erfordert deshalb eine mehrfache Nachinfiltration und -pyrolyse. Die Anwendung einer Herstellungstechnik, die eine mehrmalige Wiederholung der Infiltration- und Pyrolyseschritte vorsieht, wird unter dem Aspekt der wesentlich verlängerten Prozeßzeiten durch wirtschaftlich Gesichtspunkte limitiert.

In der US 5,133,993 wird ein faserverstärkter keramischer Verbundwerkstoff beschrieben, dessen mehrphasige Matrix aus Siliziumkabid SiC, Siliziumnitrid Si₃N₄ oder Bomitrid besteht.

Die JP-A-5 070 227 beschreibt ein Herstellungsverfahren für einen faserverstärkten kermaischen Verbundwerkstoff, bei dem die Partikelgröße der für den Matrixaufbau benötigten Ausgangsmaterialien kleiner als 100 µm sein soll. Als mögliche Ausgangsmaterialien für den Matrixaufbau werden eine große Anzahl von keramischen Pulvern und Metallen angegeben, darunter auch B₄C, SiC, BN und B.

Aufgabenstellung der vorliegenden Erfindung ist es, die mit den vorstehend beschriebenen Oxidationsschutzsystem und Herstellungsverfahren von Matrices verbundenen Nachteile zu überwinden. Eine Faserschädigung während des Herstellungsprozesses ist zu vermeiden. Es soll ein Herstellungsverfahren unter Verwendung eines hydrolyse- und photooxidationsbeständigen Precursors bereitgestellt werden. Die bei der thermischen Umsetzung entstehende Schwindung gilt es zu eliminieren und das Rißaufkommen zu minimieren, um eine endkonturnahe Grünkörperbearbeitung zu ermöglichen. Es soll ein hochtemperaturbeständiger hochfester Faserverbundwerkstoff entstehen, dessen Gefüge dahingehend variiert werden kann, daß eine Rißminimierung sowie ein Abbbau innerer Spannungen ermöglicht wird. Die mangelhafte Oxidationsbeständigkeit bisheriger Systeme gilt es soweit zu verbessern, daß ein temporärer Hochtemperatureinsatz auch in oxidierender Atmosphäre ohne zusätzliche Oxidationsschutzsysteme ermöglicht wird. Das Oxidationsverhalten muß soweit modifiziert werden, daß kleine Schäden an externen Oxidationsschutzschichten durch den innneren Oxidationsschutz ausgeglichen werden.

Diese Aufgabenstellung wird durch den Gegenstand des Patentanspruchs 1 gelöst. Vorteilhafte Ausgestaltungen der Erfindung sowie ein Verfahren zur Herstellung des erfindungsgemäßen Verbundwerkstoffs sind Gegenstand weiteren Ansprüche.

Gegenstand der Erfindung ist ein hochtemperaturstabiler, hochfester, temporär oxidationsbeständiger Faserverbundwerkstoff mit keramischer Matrix gemäß Anspruch 1, der dadurch erhalten wird, daß die Faser mit einer Si-Polymer/Bor-Suspension oder einem Gemisch aus Si-Polymer und einer Bor-Verbindung infiltriert und diese zu einem faserverstärkten Polymerverbundwerkstoff verdichtet und vernetzt wird. Dieser wird durch eine thermische Umsetzung insbesondere in einer reaktiven N₂-Atmosphäre zu einem keramischen Verbundwerkstoff umgewandelt. Die Matrix zeichnet sich dabei durch eine einstellbare Schwindung (bis 0%) aus und verbessert zugleich die Oxidationsschutzwirkung für die Faser. Durch die thermochemische Kompatibilität von Faser und Matrix wird eine Faserschädigung bei der Herstellung vermieden.

Nach dem erfindungsgemäßen Verfahren reagiert das Bor oder/und die Borverbindung bei Temperaturen bis 1600°C mit dem siliziumorganischen Precursor und ggf. der N₂-Atmosphäre unter Bildung sauerstoffarmer, hochtemperaturbeständiger keramischer Reaktionsprodukte, welche die Matrix sowie die Oberflächendeckschicht des Faserverbundwerkstoffes bilden. Dabei wird eine keramisches Interface zwischen Faser und Matrix *in situ* gebildet. Durch die von der Polysiloxan-Bor-Stickstoff-Reaktion hervorgerufene Kompensation der linearen Schwindung (bis 0%) gegenüber bis 30% im füllerfreien Polysiloxan können rißarme Matrices und Oberflächenschichten mit erhöhten Sauerstoffdiffusionswiderstand erzeugt werden. Die Matrix des erfindungsgemäßen Faserverbundwerkstoffes ist eine mehrphasige amorphe, teilkristalline oder kristalline Matrix aus Borkarbid (B₄C) und Siliziumkarbid (SiC), und ggf. Bornitrid und/oder Oxykarbid. In oxidativer Atmosphäre kommt es zur Versiegelung der Verbundkörperoberfläche durch die Ausbildung eines Borosilikatglases, das sowohl als innerer als auch als äußerer Oxidationsschutz wirkt. Entstandene Mikrorisse werden durch die Glasversiegelung geschlossen.

Aufgrund des erfindungsgemäß erreichten inneren und äußeren Qxidationsschutzes, der durch die keramische Matrix selbst gewährleistet wird, durch die Maßhaltigkeit, durch die *in situ* erzeugte keramische Schicht zwischen Faser und Matrix, den daraus resultierenden hohen mechanischen Festigkeiten und der bei der Herstellung des Faserverbundes sichergestellten Integrität der Faser sowie der sehr variablen Formgebung eignet sich der erfindungsgemäß herstellbare Faserverbundwerkstoff mit keramischer Matrix für die Anwendung als Bauteil oder Komponente für Temperaturen oberhalb 1000°C in der Luft- und Raumfahrttechnik, in Wärmekraftmaschinen, in der Verkehrstechnik oder in der Energietechnik.

Die nachfolgenden Beispiele erläutern die Erfindung in Verbindung mit den beigefügten Abbildungen näher. Soweit keine ergänzenden Angaben gemacht werden, beziehen sich Anteile und Prozentangaben auf die Masse und Temperaturen auf die Celsius-Skala.

Es zeigen:
- Fig. 1: eine TEM-Aufnahme eines Faser/Matrix-Grenzbereichs von Beispiel 2,
- Fig. 2: den Oxidationsschutz durch Ausbildung einer Glasversiegelung und
- Fig. 3: ein Gefüge eines C-Faserverstärkten Verbundes von Beispiel 1.

### 1. Beispiel:

In einer 2000 ml PE-Flaschen werden 235 g eines Phenyl-Vinyl-Methyl-Hydrogen-Polysiloxan in 240 g eines Di- und Trialkyllbenzolgemisches gelöst und unter Rühren 325g Bor zugeben. Die Suspension wird mit Al₂O₃ Mahlkugeln versetzt und auf einer Rollerbank homogenisiert. Mit dem so entstandenen Schlicker wird die kohlenstoffbeschichtete C-Faser (Toray, T800 6k) infiltriert und mit Hilfe einer Wickelanlage unidirektional als Prepreg abgelegt. Die getrockneten Prepregs werden zugeschnitten und zu bidirektionalen Verbundkörpern mit symetrischem Lagenaufbau in Autoklavformen laminiert. Die Verdichtung und Vernetzung erfolgt in Vakuumtaschen in einem Autoklaven.

Der vernetzte Verbundkörper wird unter Stickstoff bei 1450°C thermisch umgesetzt.

### 2. Beispiel:

Das in Beispiel 1 beschriebene Verfahren zur Herstellung vernetzter Verbundkörper wird wiederholt. Es kommt aber ein veränderter thermischer Umwandlungsprozeß zur Anwendung. Der vernetzte Verbundkörper wird unter fließendem Stickstoff bei 1150°C thermisch umgesetzt.

### 3. Beispiel:

Das in Beispiel 2 beschriebene Verfahren zur Herstellung keramischer Faserverbundkörper wird wiederholt, nur mit dem Unterschied eine kohlenstoffbeschichtete SiC-Faser (Nicalon, NL607) zu verwenden.

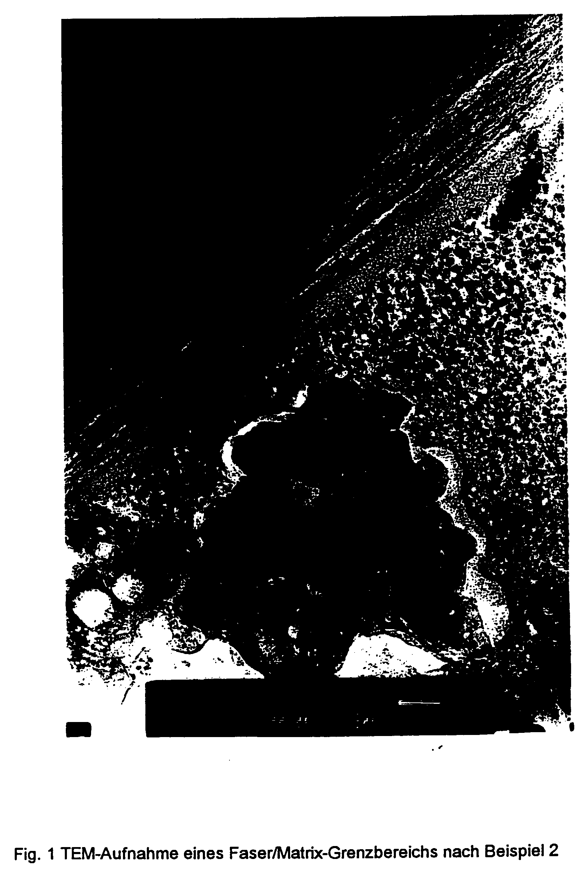

Bei der thermischen Umsetzung der gemäß Beispiel 1 bis 3 hergestellten Verbundwerkstoffe beginnen die Füllstoffreaktionen bei Temperaturen > 800°C unter Bildung von Borkarbid. Gleichzeitig wird *insitu* eine SiC-Grenzschicht zwischen der Faser und der Matrix gebildet, die die mechanischen Eigenschaften verbessert. Durch die SiC-Faser-Matrixgrenzschicht können innere Spannungen abgebaut werden. In der TEM-Aufnahme (Fig. 1) ist in der oberen Bildhälfte die C-Faser zu erkennen, die von der Matrix durch eine homogene SiC-Grenzschicht getrennt ist. Die Si-(O)-C-Phase enthält Kohlenstoffcluster, die die Dunkelfärbung verursachen. Die Karbidbildung des Füllstoffes führt zu einer Kohlenstoffabreicherung der Si-(O)-C-Phase um das Füllstoffpartikel. Die metallischen, reaktiven Füllstoffe Bor oder eine Borverbindung reagieren mit den Zersetzungsprodukten des Si-Polymers und der reaktiven Atmosphäre zu einer durch die Temperaturführung einstellbaren keramischen Matrix. Bis zu einer Pyrolysetemperatur von 1150°C entsteht ein teil-amorpher hochfester, schadenstoleranter Verbundwerkstoff, mit einer maximalen Einsatztemperatur von ca. 1150°C. Eine Steigerung der Pyrolysetemperatur erhöht die Kristallinität der Matrix, verstärkt die Nitridierung und senkt den Sauerstoffgehalt. Das auskristallisierte System zeichnet sich durch eine stark erhöhte Einsatztemperatur (ca. 1600°C) aus.

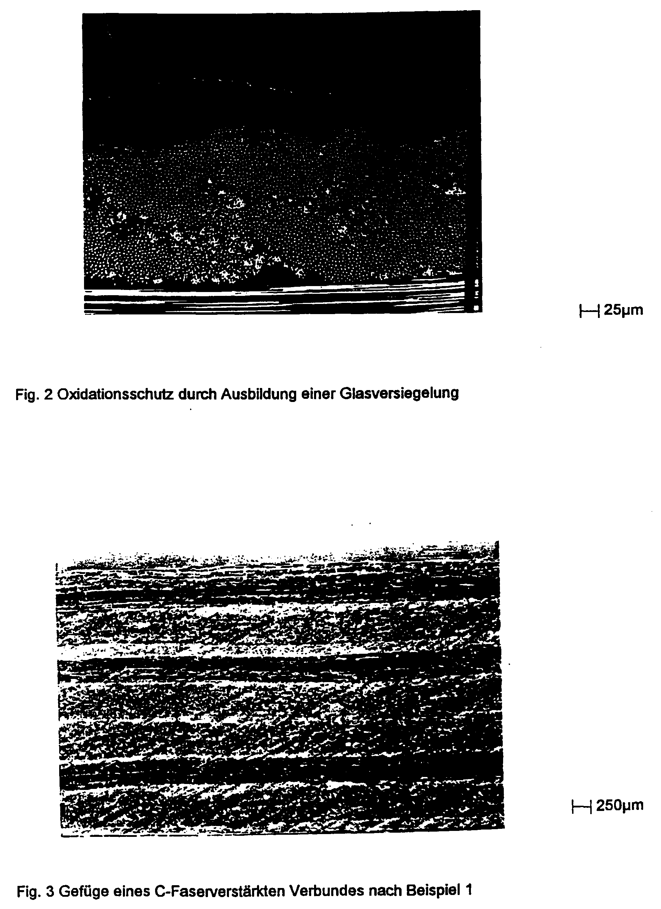

In sauerstoffhaltiger Atmosphäre bildet das Matrixmaterial ab einer Temperatur von ca. 600°C eine Glasversiegelung, indem die Oberfläche Sauerstoff aufnimmt und ein B₂O₃-Glas bildet. Bei Temperaturen ≥ 1000°C bildet das SiC oberflächlich SiO₂. Aus diesem Borosilikatglas kann Boroxid abdampfen und die Oberfläche wird mit SiO₂ angereichert, das auch bei hohen Temperaturen eine wirksame Sauerstoffdiffusionsbarriere darstellt [6]. Die so gebildete Borosilikatglasversiegelung (Fig. 2) verhindert deshalb in sauerstoffhaltiger Atmosphäre sowohl bei niedrigen Temperaturen (ca. 600-1000°C) als auch bei hohen Temperaturen (ca. 1000-1400°C) ein frühzeitiges Abbrennen der C-Fasern. Das teilamorphe System weist gegenüber der auskristallisierten Matrix eine vermehrte Sauerstoffaufnahme auf.

In der nachstehenden Tabelle sind die Werkstoffeigenschaften der Beispiele 1 bis 3 aufgeführt:

| | Werkstoff Beispiel 1 | Werkstoff Beispiel 2 | Werkstoff Beispiel 3 |
|---|---|---|---|
| Fasergehalt [Vol.%] | 44 | 42 | 38 |
| Zugfest. [MPa] | 140 | 250 | 190 |
| Kurzbiegefest. [MPa] | 4 | 6 | 4,5 |
| max. Anwendungstemp. | ca. 1600°C | ca. 1150°C | ca. 1150°C |
| Oxidationsbest. (1400°C, 1h) Δmₒₓ [mg/cm²] | -3,07 | 1,0 | 11 |
| Dichte [g/cm³] | 2,04 | 2,1 | 2,44 |
| lin. Schwind.[%] | 0 | 2 | 2 |
| keram. Ausbeute [%] | 100 | 93 | 93 |

Das in Fig.3 dargestellte Gefüge (Beispiel 1) zeigt die hohe Dichte und Homogenität des Verbundkörpers. Dies wird durch die Füllstoffreaktionen erreicht, die zu einer nahezu Nullschwindung führen und eine keramische Ausbeute des im Autoklaven vernetzten Grünkörpers von ca. 100% bewirken.

## Patentansprüche

1. Hochfester Verbundwerkstoff, der eine keramische Matrix aus einer amorphen, teilkristallinen oder kristallinen Struktur aus Siliziumkarbid,SiC, und Borkarbid,B₄C, sowie als Verstärkungsfaser eine C-Faser oder anorganische Faser aufweist.

2. Hochfester Verbundwerkstoff nach Anspruch 1 oder 2, dadurch gekennzeichnet, daß die amorphe, teilkristalline oder kristalline Struktur zusätzlich Oxykarbid enthält.

3. Hochfester Verbundwerkstoff nach Anspruch 1 oder 2, dadurch gekennzeichnet, daß die amorphe, teilkristalline oder kristalline Struktur zusätzlich Bornitrid,BN, enthält.

4. Hochfester Verbundwerkstoff nach einem der vorangehenden Ansprüche, dadurch gekennzeichnet, daß die Verstärkungsfasern keramische Fasern auf der Basis von SiC, Si₃N₄, BN, B₄C oder Kohlenstoffasern sind.

5. Hochfester Faserverbundwerkstoff nach einem der vorangehenden Ansprüche, dadurch gekennzeichnet, daß eine Faserbeschichtung aus C, BN, β-Al₂O₃ oder Schichtsilikaten vorhanden ist, mit der die Haftung zwischen Faser und Matrix gezielt reduziert wird, so daß eine hohe Festigkeit und Schadenstoleranz mit Faser Pull-Out erzielt werden kann.

6. Hochfester Faserverbundwerkstoff nach einem der vorangehenden Ansprüche, dadurch gekennzeichnet, daß eine in situ gebildete keramische SiC-Schicht zwischen Matrix und Verstärkungsfaser vorhanden ist, durch die eine hohe mechanische Festigkeit und Schadenstoleranz mit Faser-Pull-Out erzielt wird.

7. Verfahren zur Herstellung eines hochtesten Verbundwerkstoffes nach einem der vorangehenden Ansprüche, mit folgenden Verfahrensschritten:
- Verwendung einer Mischung aus einem Si-Polymer und Bor oder einer Borverbindung als Rohstoffe für den Matrixaufbau;
- Infiltration der Verstärkungsfasern mit der Mischung für den Matrixaufbau;
- Verdichtung und Vernetzung der infiltrierten Verstärkungsfasern zu einem Verbundkörper;
- Thermische Umsetzung bei Temperaturen bis zu 1600°C in Schutzgasatmosphäre oder in einer reaktiven Atmosphäre von N₂ oder von NH₃ oder von N₂ und einem C-haltigen reaktiven Gas.

8. Verfahren zur Herstellung eines hochfesten Verbundwerkstoffs nach Anspruch 7 dadurch gekennzeichnet, daß die Mischung für den Matrixaufbau folgendermaßen erzeugt wird: dem Si-Polymer wird im flüssigen oder gelösten Zustand das Bor oder die Borverbindung beigemengt.

9. Verfahren zur Herstellung eines hochfesten Verbundwerkstoffs nach Anspruch 7, dadurch gekennzeichnet, daß der Mischung für den Matrixaufbau zusätzlich ein SiC-Pulver zugegeben wird.

10. Verfahren zur Herstellung eines hochfesten Verbundwerkstoffs nach einem der vorangehenden Ansprüche 7 bis 9, dadurch gekennzeichnet, daß das Si-Polymer ein Polysiloxan ist.

## Claims

1. High-strength composite comprising a ceramic matrix having an amorphous, partially crystalline or crystalline structure composed of silicon carbide, Sic, and boron carbide, B₄C, plus a carbon fibre or inorganic fibre as reinforcing fibre.

2. High-strength composite according to Claim 1 or 2, characterized in that the amorphous, partially crystalline or crystalline structure additionally contains oxycarbide.

3. High-strength composite according to Claim 1 or 2, characterized in that the amorphous, partially crystalline or crystalline structure additionally contains boron nitride, BN.

4. High-strength composite according to any of the preceding claims, characterized in that the reinforcing fibres are ceramic fibres based on SiC, Si₃N₄, BN, B₄C or carbon fibres.

5. High-strength fibre-reinforced composite according to any of the preceding claims, characterized in that a fibre coating of C, BN, β-Al₂O₃ or sheet silicates by means of which the adhesion between fibre and matrix can be reduced in a tailored manner so that a high strength and damage tolerance with fibre pull-out can be achieved is present.

6. High-strength fibre-reinforced composite according to any of the preceding claims, characterized in that a ceramic SiC layer formed in-situ is present between matrix and reinforcing fibre, by means of which a high mechanical strength and damage tolerance with fibre pull-out is achieved.

7. Process for producing a high-strength composite according to any of the preceding claims, comprising the following process steps:
- use of a mixture of an Si polymer and boron or a boron compound as raw materials for formation of the matrix;
- infiltration of the reinforcing fibres with the mixture for formation of the matrix;
- densification and crosslinking of the infiltrated reinforcing fibres to form a composite body;
- thermal reaction at temperatures of up to 1600°C in a protective gas atmosphere or in a reactive atmosphere of N₂ or of NH₃ or of N₂ and a carbon-containing reactive gas.

8. Process for producing a high-strength composite according to Claim 7, characterized in that the mixture for formation of the matrix is produced as follows: the boron or the boron compound is mixed into the Si polymer in the liquid or solution state.

9. Process for producing a high-strength composite according to Claim 7, characterized in that an SiC powder is additionally added to the mixture for formation of the matrix.

10. Process for producing a high-strength composite according to any of Claims 7 to 9 above, characterized in that the Si polymer is a polysiloxane.

## Revendications

1. Matériau composite hautement résistant, qui présente une matrice céramique d'une structure amorphe, partiellement cristalline ou cristalline de carbure de silicium, SiC, et de carbure de bore, B₄C, ainsi qu'en tant que fibre de renforcement, une fibre de C ou une fibre inorganique.

2. Matériau composite hautement résistant suivant la revendication 1 ou 2, caractérisé en ce que la structure amorphe, partiellement cristalline ou cristalline, contient en outre de l'oxycarbure.

3. Matériau composite hautement résistant suivant la revendication 1 ou 2, caractérisé en ce que la structure amorphe, partiellement cristalline ou cristalline, contient en outre du nitrure de bore, BN.

4. Matériau composite hautement résistant suivant l'une quelconque des revendications précédentes, caractérisé en ce que les fibres de renforcement sont des fibres céramiques à base de SiC, de Si₃N₄, de BN, de B₄C ou des fibres de carbone.

5. Matériau composite à fibres hautement résistant suivant l'une quelconque des revendications précédentes, caractérisé en ce qu'un revêtement de fibres par du C, du BN, de l'Al₂O₃ β ou par des silicates en couches est présent, avec lequel l'adhérence entre fibre et matrice est réduite de manière adéquate, de sorte qu'on peut réaliser une résistance élevée et une tolérance aux dommages à la traction sur fibres.

6. Matériau composite à fibres hautement résistant suivant l'une quelconque des revendications précédentes, caractérisé en ce qu'une couche céramique de SiC formée in situ entre matrice et fibre de renforcement est présente, par laquelle on réalise une résistance mécanique élevée et une tolérance aux dommages à la traction sur fibres.

7. Procédé de fabrication d'un matériau composite hautement résistant suivant l'une des revendications précédentes, avec les étapes de procédé suivantes :
- utilisation d'un mélange d'un polymère au Si et de bore ou d'un composé de bore comme matière première pour la constitution de la matrice;
- infiltration du mélange pour la constitution de la matrice dans les fibres de renforcement;
- compression et réticulation en un corps composite des fibres de renforcement dans lesquelles on a infiltré, et
- transformation thermique à des températures jusqu'à 1 600°C sous atmosphère de gaz protecteur ou sous atmosphère réactive de N₂ ou de NH₃ ou de N₂ et d'un gaz réactif carboné.

8. Procédé de fabrication d'un matériau composite hautement résistant suivant la revendication 7, caractérisé en ce que le mélange pour la formation de la matrice est produit de la manière suivante : on incorpore le bore ou le composé de bore au polymère au Si à l'état liquide ou dissous.

9. Procédé de fabrication d'un matériau composite hautement résistant suivant la revendication 7, caractérisé en ce qu'on ajoute en outre une poudre de SiC au mélange destiné à la constitution de la matrice.

10. Procédé de fabrication d'un matériau composite hautement résistant suivant l'une des revendications 7 à 9, caractérisé en ce que le polymère au Si est un polysiloxane.
